# EUROPEAN PATENT APPLICATION

(11) **EP 4 751 969 A1**
(43) Date of publication of application: **03.06.2026**
(21) Application number: 25220079.5
(22) Date of filing: 02.12.2025
(51) Int. Cl.: B60K 35/10, B60K 35/22, B60R 1/00

(54) **IN-VEHICLE SYSTEM, VEHICLE, AND INFORMATION PROCESSING APPARATUS**

(30) Priority: 02.12.2024 JP 2024209708
(71) Applicant: Toyota Jidosha Kabushiki Kaisha, Toyota-shi, Aichi-ken 471-8571 (JP)
(72) Inventor: TANAKA, Seiichi, Toyota-shi, 471-8571 (JP); FUJIWARA, Tatsuro, Toyota-shi, 471-8571 (JP); TSUJINO, Miki, Toyota-shi, 471-8571 (JP); ONISHI, Kanta, Toyota-shi, 471-8571 (JP); KOBATAKE, Yasuhiro, Toyota-shi, 471-8571 (JP); TANIZAWA, Tatsuya, Toyota-shi, 471-8571 (JP); SHIN, Akinori, Toyota-shi, 471-8571 (JP); TODAKA, Junichi, Toyota-shi, 471-8571 (JP); NAKANISHI, Kyosuke, Toyota-shi, 471-8571 (JP); HASEGAWA, Hideo, Toyota-shi, 471-8571 (JP); YOKOYAMA, Yuu, Toyota-shi, 471-8571 (JP)
(74) Representative: D Young & Co LLP

(57) **Abstract**

A simple interface is provided for adjusting a side mirror. An in-vehicle system includes a display device (27) having a display module (22, 23) with a touch panel (25), and an information processing apparatus (10) having a controller (101) configured to execute obtaining a swipe operation performed on the display module (22, 23) and outputting a drive command for adjusting an inclination of a side mirror of a vehicle (1) based on the swipe operation.

## Description

### TECHNICAL FIELD

The present disclosure relates to a vehicle technology.

### BACKGROUND ART

There are technologies that provide information to reduce the burden on drivers who drive automobiles. In this connection, for example, Patent Literature 1 discloses an in-vehicle system that controls air conditioning using a touch panel.

### Citation List

### Patent Literature

Patent Literature 1: Japanese Patent Application Laid-Open Publication No. 2023-043728

### SUMMARY OF INVENTION

### TECHNICAL PROBLEM

The object of the present disclosure is to provide a simple and convenient interface for adjusting side mirrors.

### SOLUTION TO PROBLEM

One aspect of the present disclosure is directed to an in-vehicle system including a display device, and an information processing apparatus configured to output information via the display device,
the display device including a pair of display modules that are provided in a forward portion of a driver's seat in a passenger compartment, are disposed at positions on both sides of a steering wheel while protruding rearward of an instrument panel disposed in front of the steering wheel, and have touch panels,
the information processing apparatus including a controller configured to execute:
   obtaining a touch operation performed on one of the pair of display modules; and
   outputting, based on the touch operation, a drive command for adjusting an inclination of a side mirror located in a direction corresponding to the display module on which the touch operation is performed, among the pair of display modules.

Another aspect of the present disclosure is directed to an in-vehicle system including:
a display device including a display module with a touch panel; and
an information processing apparatus including a controller configured to execute obtaining a swipe operation performed on the display module, and outputting a drive command for adjusting an inclination of a side mirror of a vehicle based on the swipe operation.

A further aspect of the present disclosure is directed to an information processing apparatus configured to provide information via a display device including a display module with a touch panel,
the information processing apparatus including a controller configured to execute:
obtaining a swipe operation performed on the display module; and
outputting a drive command for adjusting an inclination of a side mirror of a vehicle based on the swipe operation.

In addition, other aspects of the present disclosure are directed to a vehicle equipped with the above-described in-vehicle system, an information processing method to be executed by the above-described information processing apparatus, a program for causing a computer to execute the information processing method, and a non-transitory computer readable storage medium storing the program.

### ADVANTAGEOUS EFFECTS OF INVENTION

According to the present disclosure, it is possible to provide a convenient interface for adjusting a side mirror.

### BRIEF DESCRIPTION OF DRAWINGS

FIG. 1 is a view illustrating the passenger compartment of a vehicle according to an embodiment.
FIG. 2 is an enlarged view of a steering wheel and its surroundings.
FIG. 3 is a diagram illustrating an example of components of the vehicle 1.
FIG. 4 is a diagram illustrating an example of the components of a vehicle ECU.
FIG. 5 is a diagram illustrating a list of screens output to an outer display.
FIG. 6 is a diagram illustrating an example of screens output to the outer display.
FIG. 7 is a diagram illustrating an example of screens output to the outer display.
FIG. 8 is a diagram illustrating an example of screens for adjusting side mirrors.
FIG. 9 is a view illustrating an example of how to adjust a side mirror.
FIG. 10 is a diagram illustrating a list of screens output to an inner display.
FIG. 11 is a diagram illustrating an example of screens output to the inner display.
FIG. 12 is a diagram illustrating an example of screens output to the inner display.
FIG. 13 is a flowchart of processing to be executed by an HMI controller.
FIG. 14 is a view illustrating an example of a display device according to a modification.
FIG. 15 is a diagram illustrating an example of a screen output according to another modification.

### DESCRIPTION OF THE EMBODIMENTS

In recent years, as automobiles have become more sophisticated, the displays used to provide information are becoming larger, or the number of displays is increasing.

For example, a method has been proposed in which a large-sized touch panel display is disposed between a driver's seat and a front passenger seat in a front portion of a vehicle compartment, to collectively perform vehicle-related operations and information provision. However, in such a method, the line of sight of the driver is significantly moved when operating the components included in the vehicle or checking the output information. For the driving safety of the vehicle, it is preferable to minimize the movement of the driver's line of sight.

In general, a display device such as a liquid crystal display is often disposed in the area in front of the driver's seat where an instrument panel is conventionally located. By outputting information to the display device, the movement of the driver's line of sight can be minimized. However, the size of the display device disposed in front of the driver's seat is limited, and hence, it is not always possible to display all the pieces of information required by the driver. In addition, when these pieces of information are simultaneously output in the same area, for example, information necessary for driving the vehicle and auxiliary information such as entertainment will be mixed together, which will hinder intuitive information transmission.

In addition, there are also problems with the layout of the input interface for operation. For example, a steering wheel is known that has cursor keys and push button switches to enable input operations while driving. However, in such an input interface, the layout of buttons and the like is fixed, making it difficult to adapt to a plurality of different targets. For example, in a case where the set temperature of an air conditioner can be raised or lowered, it can be changed by using two physical keys, but it is not possible to directly specify any point on a map by using the physical keys. A form of operation by a touch panel could be considered, but as mentioned above, the touch panel display located in the front portion of the vehicle compartment is far from the steering wheel, so in addition to the movement of the driver's line of sight, the driver's hands also move significantly.

To solve these problems, an in-vehicle system has been devised in which a display device that allows input operations by touch is located in the vicinity of a steering wheel. For example, by arranging displays with touch panels on the left and right sides of the steering wheel, it is expected that the driver will be able to operate vehicle components more intuitively and quickly.

An in-vehicle system according to one aspect of the present disclosure includes a display device having a display module with a touch panel, and an information processing apparatus having a controller configured to obtain a swipe operation performed on the display module and output a drive command for adjusting an inclination of a side mirror of a vehicle based on the swipe operation.

The swipe operation is an operation to specify a direction by sliding and moving a pressed position on the touch panel. The information processing apparatus outputs a drive command for adjusting the inclination of the side mirror based on the operation. By specifying the direction through the swipe operation, the driver of the vehicle can more intuitively specify the direction in which the side mirror is to be tilted.

Here, note that the display device may include a pair of display modules disposed on both sides of a steering wheel, and the controller may output a drive command for adjusting the inclination of a side mirror located in a direction corresponding to the display module on which the swipe operation is performed, of the pair of display modules.

In a case where the display device includes the display modules disposed on the left and right sides of the steering wheel, the display device can be used as an interface for operating vehicle components such as side mirrors which are used as a pair of left and right components. For example, the information processing apparatus generates a drive command for adjusting the angle of the side mirror on the right side of the vehicle based on a swipe operation performed on the display module installed on the right side of the steering wheel, and generates a drive command for adjusting the angle of the side mirror on the left side of the vehicle based on a swipe operation performed on the display module installed on the left side of the steering wheel. This configuration allows the angles of the side mirrors to be adjusted more intuitively.

Note that the drive command may be a command for driving an actuator that adjusts the inclination of the side mirror located in the corresponding direction. The actuator may be capable of tilting the side mirror in all directions of 360 degrees. In this case, the drive command may include data indicating a direction in which the side mirror is to be tilted.

The controller may generate the drive command to tilt the side mirror located in the corresponding direction in the swiped direction.

Further, the swipe operation may include a first operation of pressing down a first position on the touch panel and a second operation of moving a finger from the first position to a second position without releasing or separating the finger from the touch panel, and the controller may determine a direction in which the side mirror located in the corresponding direction is tilted based on a direction of the second position with reference to the first position.

In addition, the controller may continuously output the drive command for changing the inclination of the side mirror in the determined direction while the second operation is performed. Also, when the second operation is performed, the controller may output the drive command for changing the inclination of the side mirror in the determined direction for a predetermined period of time.

The "swipe operation" in the present disclosure may be an operation of specifying one direction by sliding a finger on the touch panel only once, or may be an operation of continuously specifying a plurality of directions by moving the finger a plurality of times without separating the finger from the touch panel. In the former case, the first operation and the second operation are performed consecutively, but in the latter case, the first operation is followed by a plurality of second operations. The second operations may end at a timing when the finger moves to the second position (i.e., a timing when any direction is specified), or may end at a timing when the finger moving to the second position is separated from the touch panel.

For example, the controller may determine the direction to tilt the side mirror based on the relative relationship between the position at which the finger was initially placed and the position of the finger after it has moved, and may drive the mirror while the finger is in contact (or for a predetermined period of time). According to such a configuration, the position at which the finger was initially placed becomes a reference position, so it is not necessary to perform an operation of visually checking the position where the finger should be initially placed on the touch panel, thus making it possible to more easily specify the direction.

Moreover, the controller may further execute outputting first information including at least information related to the control of the vehicle via a first display module disposed closer to an outer side of the vehicle among the pair of display modules, and outputting second information including at least information related to the convenience of an occupant in the vehicle via a second display module disposed closer to an inner side of the vehicle among the pair of display modules.

The first information can be information including at least the information related to the control of the vehicle. The first information may be, for example, a notification of the current state of the vehicle, or an interface screen for controlling the vehicle or the like. The first information is preferably information for performing vehicle control for appropriate traveling. The vehicle control includes control for causing the state of the vehicle to comply with laws and regulations, such as the operation of windshield wipers, lighting of lights, etc.

The second information can be information including at least the information related to the convenience of the occupant. The second information may further include, for example, information related to the comfort of the occupant. The second information may be, for example, information for providing entertainment to the occupant of the vehicle, or an interface screen for operating equipment for the convenience or comfort of the occupant or the like. As the second information, for example, route guidance information, an operation screen of a car air conditioner, or the like can be exemplified.

The first information (information related to the control of the vehicle) and the second information (information related to the convenience of the occupant) are output to the display modules in different directions, so that the driver of the vehicle can intuitively recognize in which directions the information he or she is seeking will be output to the display modules, thus making it possible to minimize the time during which the driver's attention is focused on the display modules.

In addition, the controller may output information related to the angle adjustment of the left and right side mirrors, among the information related to the control of the vehicle, to each of the first display module and the second display module. That is, the information for adjusting the angle of each side mirror may be output in a corresponding direction regardless of the type of the information. This allows for more intuitive operation.

Hereinafter, embodiments of the present disclosure will be described based on the accompanying drawings. The configurations of the following embodiments are examples, and the present disclosure is not limited to the configurations of the embodiments.

### (First Embodiment)

An overview of a vehicle system according to a first embodiment will be described. The vehicle system according to the present embodiment is configured to include a vehicle 1.

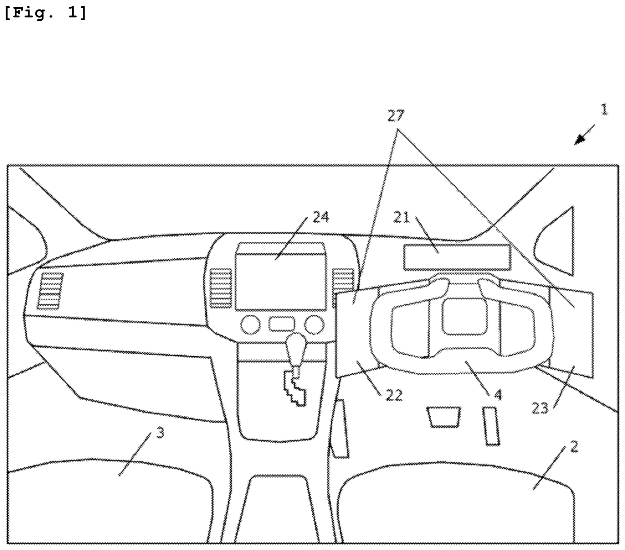

The vehicle 1 will be described with reference to FIG. 1. FIG. 1 is a view illustrating the passenger compartment of the vehicle 1. As illustrated in FIG. 1, a driver's seat 2 and a front passenger seat 3 are provided in the passenger compartment of the vehicle 1. Note that the vehicle 1 of the present embodiment is a right-hand drive vehicle, and a driver's seat 2 is provided on the right side of the vehicle 1.

A steering wheel 4 is disposed on the forward side of the driver's seat 2. The steering wheel 4 may be circular or may be U-shaped (a so-called irregular steering wheel), as illustrated.

The steering wheel 4 is connected to a steering device of the vehicle 1 via a steering column. The steering column is covered by a column cover.

The passenger seat 3 is provided on the left side of the driver's seat 2, and a center display 24 is disposed on the vehicle front side at an intermediate position between the driver's seat 2 and the passenger seat 3. The center display 24 displays, for example, auxiliary information such as car navigation, or contents related to entertainment such as audio and television.

A meter display 21 is provided on the vehicle front side of the steering wheel 4. The meter display 21 is a full-screen display that is positioned in front of the driver's seat 2 to provide various types of information to the driver of the vehicle 1. The meter display 21 displays information necessary for driving the vehicle such as, for example, a speed of the vehicle (vehicle speed), an engine speed (if the vehicle 1 has an engine), a charge and discharge condition (if the vehicle 1 has a drive battery), and a travel distance. The meter display 21 is an example of a "meter module" in the present disclosure.

A pair of display devices 27 are provided in a forward portion of the driver's seat 2 of the passenger compartment. The pair of display devices 27 includes two touch panel displays respectively disposed at positions on both sides of the steering wheel 4. In the present embodiment, the display disposed closer to the inner side of the vehicle is referred to as an inner display, and the display disposed closer to the outer side of the vehicle is referred to as an outer display. The inner display 22 and the outer display 23 are connected to an instrument panel of the vehicle 1. The outer display 23 is an example of a "first display" in the present disclosure, and the inner display 22 is an example of a "second display" in the present disclosure.

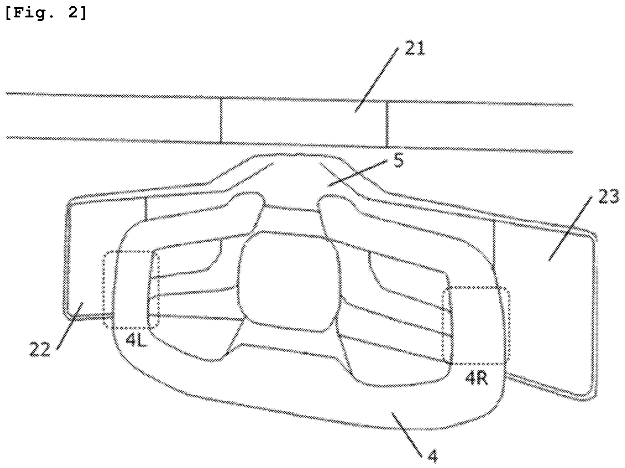

Referring to FIG. 2, the detailed structures of the inner display 22 and the outer display 23 will be described. The inner display 22 and the outer display 23 are vertically long displays, and are connected to a support portion 5 which is a member supporting each display. The support portion 5 has a shape protruding in the left and right directions of the steering wheel 4. The outer display 23 is connected to the right end of the support portion 5 when facing the vehicle front side, and the inner display 22 is connected to the left end thereof when facing the vehicle front side. Accordingly, the display screens can be located in the vicinity of grip portions of the steering wheel 4.

Here, note that the above description is an example when the vehicle 1 is a right-hand drive vehicle, and when the vehicle 1 is a left-hand drive vehicle, the left and right sides are reversed. That is, the outer display 23 is connected to the left end of the support portion 5 when facing the vehicle front side, and the inner display 22 is connected to the right end thereof when facing the vehicle front side.

The support portion 5 may also serve as a column cover that covers the steering column. The support portion 5 extends in the left and right directions (vehicle width direction) from its portion through which the steering column passes, and each of its left and right portions extends toward the vehicle rear side and is bent in its middle so that the angle thereof with respect to the left and right direction of the steering wheel becomes smaller. Further, the inner display 22 and the outer display 23 are angled with respect to the left and right direction of the steering wheel 4, and are each disposed so as to be inclined toward the steering wheel side. That is, the inner display 22 is disposed to protrude more toward the rear of the vehicle 1 the more it is inside the vehicle 1, and the outer display 23 is disposed to protrude more toward the rear of the vehicle 1 the more it is outside the vehicle 1. In this manner, the inner display 22 and the outer display 23 are each disposed so as to face the driver. An area 4R indicated by a broken line in FIG. 2 is a portion (grip portion) where the steering wheel 4 is gripped by the right hand, and an area 4L indicated by a broken line in FIG. 2 is a portion (grip portion) where the steering wheel 4 is gripped by the left hand. By forming the support portion 5 in the above-described shape, the positions of the inner display 22 and the outer display 23 in a vehicle front and rear direction can be brought closer to the grip portions of the steering wheel 4. Therefore, it is possible to further reduce the amount of hand movement when the driver performs a touch operation on the inner display 22 or the outer display 23 during driving.

### [System Configuration]

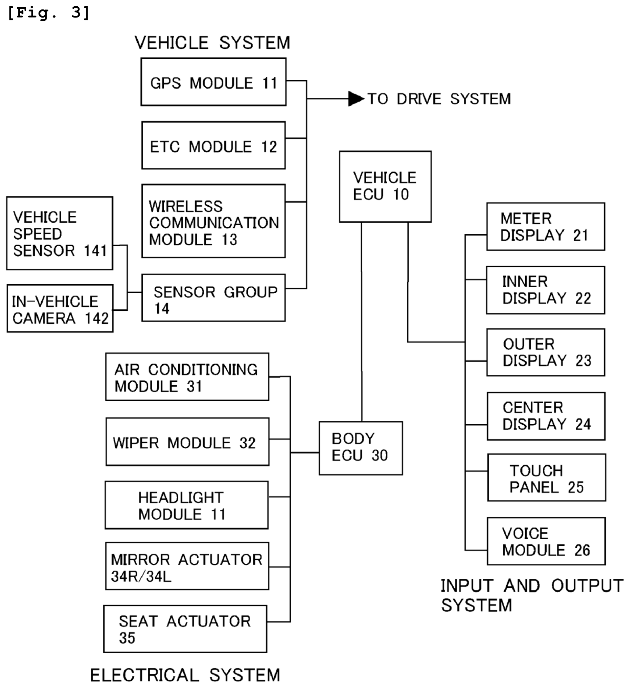

Next, the configuration of each device or component constituting the vehicle system of the vehicle 1 will be described. First, the components of the vehicle 1 will be described. FIG. 3 is a diagram schematically illustrating an example of the configuration of the vehicle 1. The vehicle 1 is configured to include a vehicle system, an electrical system, and an input and output system.

The vehicle system is a system that controls the motion of the vehicle 1. The vehicle system includes a plurality of components related to the travel of the vehicle 1. The input and output system is a system that provides information to the occupant (driver) of the vehicle 1 and obtains an input from the occupant. The input and output system includes a plurality of components for inputting and outputting information. The electrical system is a system that controls electrical equipment that the body of the vehicle has. It includes a plurality of components related to electrical equipment that the body of the vehicle has. The components included in each system may include a plurality of electrical equipment and an ECU that controls the electrical equipment.

A vehicle ECU 10 and a body ECU 30 may be configured as a computer including a processor (a CPU, a GPU, or the like), a main storage device (a RAM, a ROM, or the like), and an auxiliary storage device (an EPROM, a hard disk drive, a removable medium, or the like). An operating system (OS), various programs, various tables, etc., are stored in the auxiliary storage device, and by executing the programs stored therein, it is possible to realize each function (software module) that meets a predetermined purpose, as will be described later. However, some or all of the functions may be realized as a hardware module by a hardware circuit such as, for example, an ASIC, an FPGA or the like.

The vehicle ECU 10 is connected to a plurality of components related to the travel of the vehicle.

A GPS module 11 is a module for obtaining position information of the vehicle 1. The GPS module 11 includes a GPS antenna and a positioning module for measuring the position information. The GPS antenna is an antenna that receives positioning signals transmitted from positioning satellites (also referred to as GNSS satellites). The positioning module is a module that calculates the position information based on the signals received by the GPS antenna.

An ETC (Electronic Toll Collection System) module 12 is a module for collecting tolls on toll roads via wireless communication. The ETC module 12 is configured to include an antenna and a communication module.

A wireless communication module 13 includes an antenna and a communication module for performing wireless communication. The antenna is an antenna element for inputting and outputting radio or wireless signals. In the present embodiment, the antenna is suitable for mobile communication (e.g., mobile communication such as 3G, 4G, 5G, etc.). Note, that the antenna may be configured to include a plurality of physical antennas. The communication module is a module for performing mobile communication. In addition, the wireless communication module 13 may include a communication module other than the communication module for mobile communication. For example, the wireless communication module 13 may include a communication module based on Bluetooth (registered trademark) communication. This makes it possible to establish a wireless connection with a user terminal in the vehicle, and to provide services in cooperation with the user terminal (e.g., hands-free calling).

The sensor group 14 is a set of a plurality of sensors for obtaining sensor data used in driving the vehicle. The sensors may obtain physical quantities or may obtain image data or the like. In the present embodiment, a sensor for detecting a vehicle speed (vehicle speed sensor 141) and an image sensor for obtaining an image in front of the vehicle (in-vehicle camera 142) are exemplified as the sensors. Note that the vehicle ECU 10 may be further connected to components belonging to a drive system (e.g., an engine, a motor, a battery, a transmission, etc.).

The body ECU 30 is connected to a plurality of electrical components included in the body of the vehicle 1. In the present embodiment, examples of the electrical components provided on the body of the vehicle 1 include a car air conditioner, wipers, headlights, side mirrors, and an electric seat.

An air conditioning module 31 is the car air conditioner of the vehicle 1. The air conditioning module 31 includes, for example, a cooling module, a heating module, a compressor, a condenser, and the like. Also, the air conditioning module 31 may include a controller for controlling these components.

A wiper module 32 includes front wipers, rear wipers, motors for driving these wipers, and the like.

A headlight module 33 includes headlights of the vehicle 1 and a module for driving the headlights. The headlights are configured to be switchable between a high beam and a low beam, for example. If the headlights of the vehicle 1 are adaptive headlights, light illumination can also be controlled based on commands from the body ECU 30. The headlight module 33 may further include tail lights, stop lights, turn signals, and/or modules to drive them.

Mirror actuators 34L and 34R are drive modules for driving side mirrors disposed on the left and right of the vehicle 1. In the present embodiment, the actuator for driving the side mirror disposed on the left of the vehicle 1 is referred to as a mirror actuator 34L, and the actuator for driving the side mirror disposed on the right of the vehicle 1 is referred to as a mirror actuator 34R. The angles of the side mirrors can be adjusted upward, downward, leftward, and rightward by the mirror actuators 34L and 34R.

A seat actuator 35 includes a drive module for adjusting the position of a seat provided in the vehicle 1. By the seat actuator 35, the positions, heights, angles, etc., of the seat surface and the backrest can be adjusted.

Next, a device for inputting and outputting information will be described. In the present embodiment, the vehicle 1 includes four displays for outputting information, i.e., the meter display 21, the inner display 22, the outer display 23, and the center display 24.

The meter display 21 is a display disposed in front of the driver, and outputs information related to the vehicle 1. On the meter display 21, information related to the state of the vehicle such as, for example, a vehicle speed, an engine speed, a remaining fuel amount, a remaining battery amount, a charge and discharge condition, and a travel distance is mainly output, but other information may also be output.

The inner display 22 and the outer display 23 are displays having touch panels disposed on both sides of the steering wheel. As described above, the inner display 22 is disposed on the center side of the vehicle, and the outer display 23 is disposed on the outer side of the vehicle. In a case where the vehicle 1 is a right-hand drive vehicle, the inner display 22 is disposed on the left side in the traveling direction of the vehicle, and the outer display 23 is disposed on the right side in the traveling direction of the vehicle. However, in a case where the vehicle 1 is a left-hand drive vehicle, the inner display 22 is disposed on the right side in the traveling direction of the vehicle, and the outer display 23 is disposed on the left side in the traveling direction of the vehicle.

The center display 24 is a display disposed in the center of the vehicle. The center display 24 is disposed in a place where a display of a car navigation device was conventionally disposed. The center display 24 displays, for example, auxiliary information such as car navigation, or contents related to entertainment such as audio and television.

A touch panel 25 is a module for detecting a touch operation performed on a corresponding display described above. In the present embodiment, the inner display 22, the outer display 23, and the center display 24 each have the touch panel 25, and can be operated by touch. The touch panel 25 detects a touch operation performed on the corresponding display, and transmits the detected contents to the vehicle ECU 10.

The voice module 26 is a module for inputting and outputting information by voice. The voice module 26 may include, for example, a speaker and a microphone.

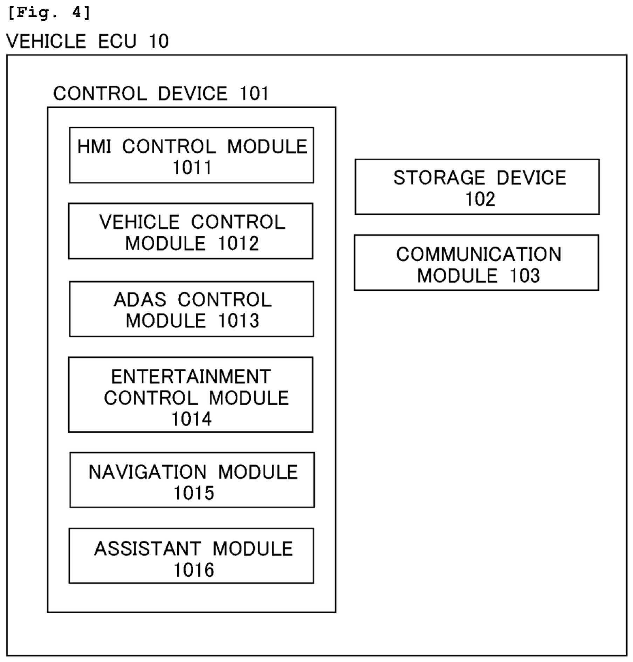

Next, a detailed configuration of the vehicle ECU 10 will be described. The vehicle ECU 10 is connected to the vehicle system and the drive (powertrain) system, thereby controlling the vehicle 1. In addition, the vehicle ECU 10 has a function of inputting and outputting information by components included in the input and output system, and a function of controlling the electrical system via the body ECU 30 that controls the electrical system. FIG. 4 is a diagram illustrating the detailed configuration of the vehicle ECU 10.

The vehicle ECU 10 is configured to include a control device 101, a storage device 102, and a communication module 103.

The control device 101 is an arithmetic module that realizes various functions of the vehicle ECU 10 by executing a predetermined program. The control device 101 can be realized by, for example, a hardware processor such as a CPU or the like. Also, the control device 101 may be configured to include a RAM, a ROM (Read Only Memory), a cache memory, etc.

In the present embodiment, the control device 101 of the vehicle ECU 10 is configured to have six software modules: an HMI controller 1011, a vehicle controller 1012, an ADAS controller 1013, an entertainment controller 1014, a navigation module 1015, and an assistant module 1016. Each software module may be realized by executing a program stored in the storage device 102 to be described later by the control device 101 (CPU or the like). Information processing executed by the software modules is synonymous with information processing executed by the control device 101 (CPU or the like).

The HMI controller 1011 generates a user interface for controlling various components included in the vehicle, and provides the user interface to the occupant of the vehicle via the input and output system. In addition, the HMI controller 1011 passes information input via the input and output system (e.g., commands for realizing the control specified by the user) to the corresponding software module or the like. This allows any component in the vehicle to be controlled via the user interface.

Here, note that in the following description, commands generated by the user for controlling components of the vehicle 1 will be referred to as "user commands". For example, a command to change the temperature of the air conditioner, a command to change the drive mode, a command to make a phone call, a command to play music, etc., are examples of the "user commands".

Note that the components included in the vehicle may be electrical equipment such as headlights and wipers. Also, the components of the vehicle may be an in-vehicle computer or software modules (e.g., autonomous driving software, navigation software, etc.) that are executed by the in-vehicle computer.

Note that the HMI controller 1011 selects the output destination of the user interface from among the plurality of displays (the meter display 21, the inner display 22, the outer display 23, and the center display 24) depending on the type of the component to be controlled. A specific configuration thereof will be described later.

The vehicle controller 1012 controls the components included in the vehicle system or the components included in the drive system. The vehicle controller 1012 may control a target component (e.g., a drive motor) based on a command (e.g., an acceleration command) received from another component (e.g., the ADAS controller 1013 to be described later), or may control a target component (e.g., a headlight module) based on a user command (e.g., a command to turn on the headlights) obtained via the HMI controller 1011. Further, the vehicle controller 1012 can communicate with the body ECU 30 to control the electrical components of the body of the vehicle 1.

The ADAS controller 1013 controls an advanced driver-assistance system. For example, the ADAS controller 1013 generates a control command for the vehicle based on sensor information obtained from the in-vehicle sensors included in the sensor group 14, thereby realizing driving assistance such as cruise control, pre-crash safety, and lane keeping assist. The ADAS controller 1013 controls the vehicle system and the drive system by transmitting control commands to the vehicle controller 1012, for example.

The entertainment controller 1014 performs control related to the entertainment provided to the occupant of the vehicle. As functions related to the entertainment, for example, there can be exemplified an audio function, a television/radio function, and the like.

The navigation module 1015 provides a car navigation function. The navigation module 1015 can generate and provide route guidance for the vehicle based on the position information obtained from the GPS module 11 and the traffic information obtained from the wireless communication module 13. The navigation module 1015 may, for example, accept the designation of vehicle destinations and transit points via the HMI controller 1011, and may also output information about the route generated.

The assistant module 1016 provides information to the occupant of the vehicle by executing a language model that allow dialogue in natural language. The language model may be, for example, a large language model (LLM). For example, by executing a LLM having information about the occupant of the vehicle, it is possible to provide information in natural language. Note that in a case where there are a plurality of occupants in the vehicle, the assistant module 1016 may obtain a language model corresponding to each person via a network and execute an appropriate language model.

The storage device 102 is a means or module for storing information, and is composed of a storage medium such as a RAM, a magnetic disk, a flash memory or the like. The storage device 102 stores programs to be executed by the control device 101, data to be used by the programs, etc.

The communication module 103 is a communication interface for connecting the vehicle ECU 10 to a vehicle network. The communication module 103 is configured to be able to communicate with components of the vehicle 1 via a network such as a controller area network (CAN) or the like.

Here, note that the specific configuration of the vehicle ECU 10 may include omission, replacement, and addition of components as appropriate, depending on its implementation. For example, the control device 101 may include a plurality of hardware processors. The hardware processors may each be composed of a microprocessor, an FPGA, a GPU, or the like. In addition, input and output devices (e.g., an optical drive and the like) other than those illustrated may be added. Also, the vehicle ECU 10 may be composed of a plurality of computers. In this case, the hardware configurations of the respective computers may or may not match each other.

### [Interface Screen Provided by HMI Control Unit]

Next, the user interface provided by the HMI controller 1011 will be described.

The HMI controller 1011 can generate a plurality of types of graphical user interface (GUI) screens and output the screens via the plurality of displays described above. In the present embodiment, the HMI controller 1011 collects the information related to the control of the vehicle on the outer display 23, also collects the information related to the convenience and comfort of the occupant on the inner display 22, and outputs the information thus collected. Accordingly, the occupant of the vehicle 1 can intuitively recognize which of the left and right sides the desired information is output to. Further, the operation surfaces of the touch panels included in the inner display 22 and the outer display 23 are disposed in the vicinity of the steering wheel. This can minimize the amount of eye and hand movement required by the driver of the vehicle.

As an exception, the HMI controller 1011 outputs information for operating a pair of left and right components such as side mirrors among the components of the vehicle 1, by using both the inner display 22 and the outer display 23. A detailed example will be described later.

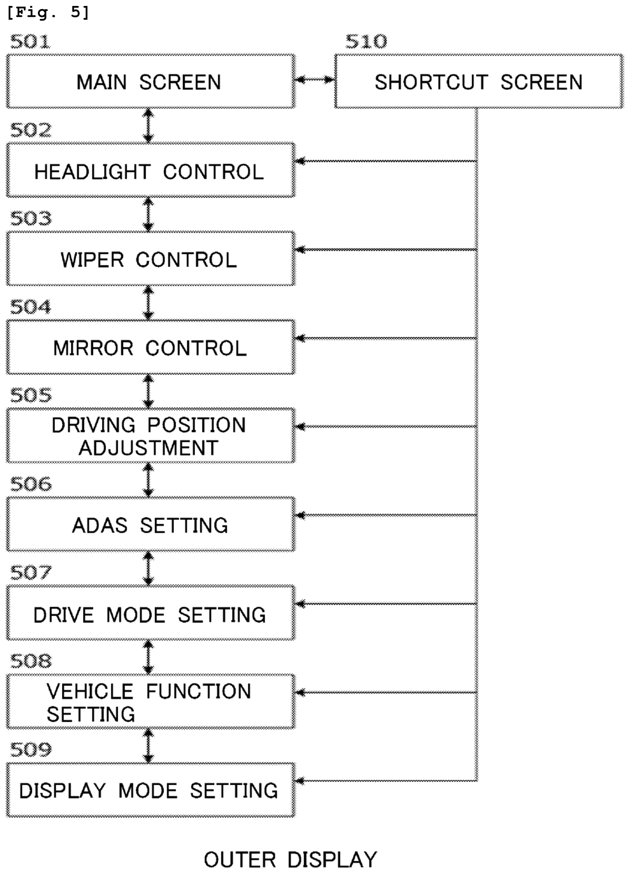

First, the screen output to the outer display 23 will be described. The HMI controller 1011 can switch between a plurality of types of screens output to the outer display 23. FIG. 5 is a diagram illustrating transitions between the plurality of types of screens output to the outer display 23. As illustrated in the figure, the HMI controller 1011 can output a plurality of screens, centered around a main screen 501, to the outer display 23.

### (1) Main Screen 501

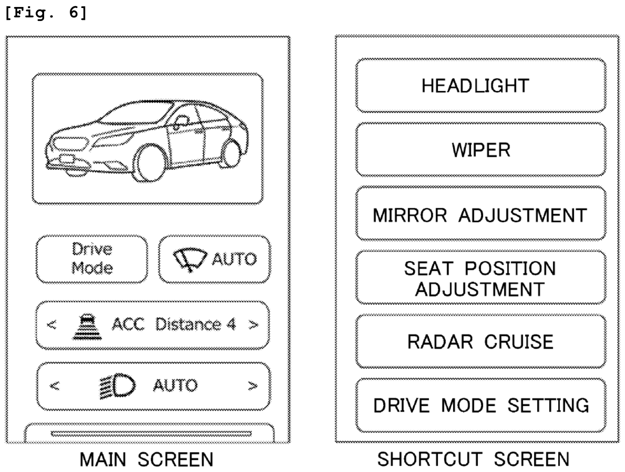

The main screen 501 is a screen that is normally displayed on the outer display during traveling. A diagram on the left side in FIG. 6 is a diagram illustrating an example of the main screen 501. The display contents of the main screen can be customized by the user.

### (2) Headlight Control Screen 502

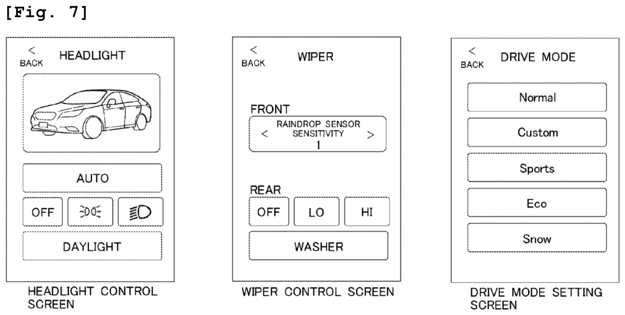

A headlight control screen 502 is a screen for setting the lighting state of the headlights included in the vehicle. A diagram on the left side in FIG. 7 is a diagram illustrating an example of the headlight control screen 502. The headlight control screen 502 allows the user to select the lighting state of the headlights (automatic, on, off, small light, daylight, etc.). The vehicle controller 1012 generates a user command based on the touch operation obtained via the HMI controller 1011, and transmits the user command to the body ECU 30 to control the headlight module 33. In addition, the vehicle controller 1012 may obtain data indicating the lighting state of the headlights from the body ECU 30 to reflect the lighting state on the screen via the HMI controller 1011. For example, the vehicle controller 1012 may reflect the current lighting state of the headlights on the graphic of the vehicle drawn on the screen.

### (3) Wiper Control Screen 503

A wiper control screen 503 is a screen for setting the operation state of the wipers (front and rear) of the vehicle 1. A diagram in the center of FIG. 7 is a diagram illustrating an example of the wiper control screen 503. The wiper control screen 503 allows the user to select the operation state of the wipers (stop, automatic operation, intermittent operation, continuous operation, etc.). The vehicle controller 1012 generates a user command based on the touch operation obtained via the HMI controller 1011, and transmits the user command to the body ECU 30 to control the wiper module 32. In addition, the vehicle controller 1012 may obtain data indicating the operation state of the wipers from the body ECU 30 to reflect the operation state on the screen via the HMI controller 1011. For example, the vehicle controller 1012 may reflect the current operation state of the wipers on the graphic of the vehicle drawn on the screen.

### (4) Mirror Control Screen 504

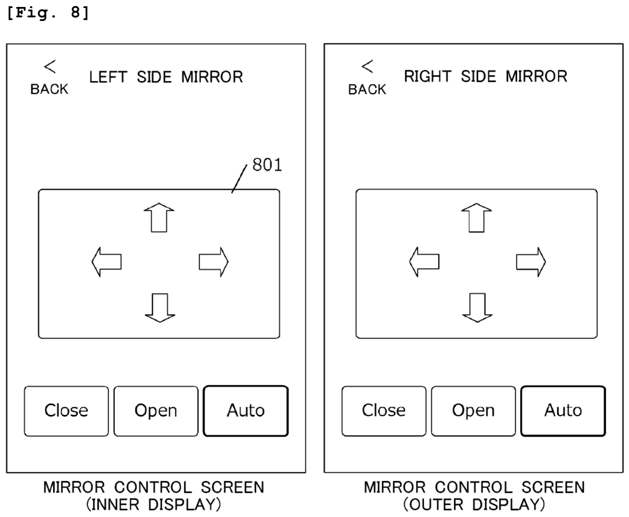

A mirror control screen 504 is a screen for adjusting the deployment state and angle of the side mirrors included in the vehicle 1. FIG. 8 is a diagram illustrating an example of the mirror control screen 504. When an operation to display the mirror control screen 504 is performed on the outer display 23, the mirror control screen is deployed on both the inner display 22 and the outer display 23. As in the present embodiment, in a case where the vehicle 1 is a right-hand drive vehicle, a screen for adjusting the left side mirror is displayed on the inner display 22, and a screen for adjusting the right side mirror is displayed on the outer display 23. Also, in a case where the vehicle 1 is a left-hand drive vehicle, a screen for adjusting the left side mirror is displayed on the outer display 23, and a screen for adjusting the right side mirror is displayed on the inner display 22. These screens allow the user to select the state (retracted/deployed state and angle) of each side mirror. The vehicle controller 1012 generates a user command based on the touch operation obtained via the HMI controller 1011, and transmits the user command to the body ECU 30 thereby to control the mirror actuator 34L and 34R. In addition, the vehicle controller 1012 may obtain data indicating the operation state of each side mirror from the body ECU 30 thereby to reflect the operation state on the screen via the HMI controller 1011. For example, the vehicle controller 1012 may reflect the current deployed/retracted state of each side mirror in the user interface drawn on the screen.

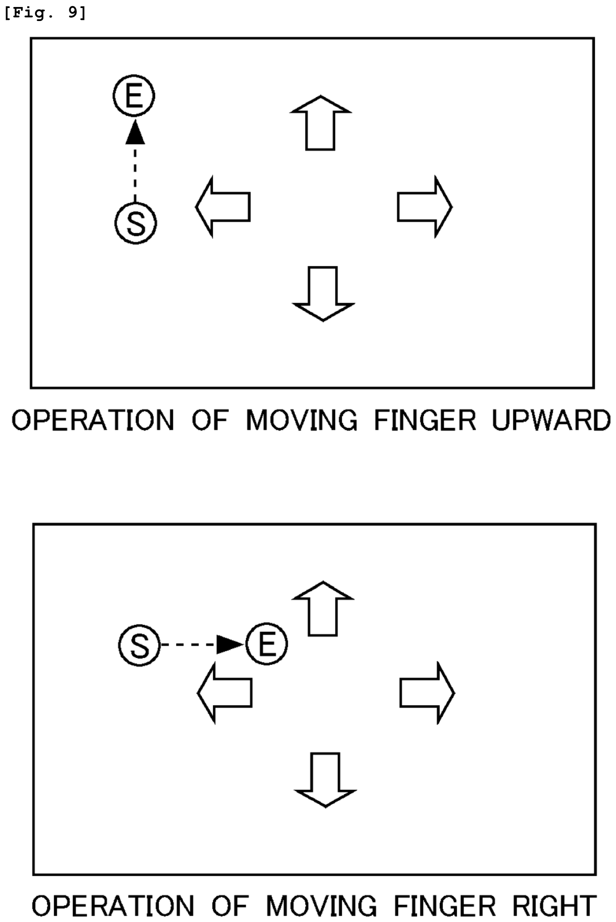

The angle of each side mirror can be adjusted by moving a finger on the touch panel (within a predetermined operation area included in the mirror control screen). FIG. 9 is a view illustrating the movement of a finger in an operation area (area indicated by reference numeral 801 in FIG. 8). Note that an arrow drawn in the operation area indicates that a direction can be specified by the movement of the finger, and does not have any meaning in itself.

The driver performs an operation (first operation) of touching any position in the operation area 801 provided on the mirror control screen and an operation (second operation) of moving his or her finger without separating the finger from the touch panel. For example, A diagram on the upper side in FIG. 9 illustrates an example of a case where the driver performs an operation of moving his or her finger upward while keeping the finger in contact with the touch panel. In the illustrated example, "S" indicates the location where the driver first touched the screen with his or her finger, and "E" indicates the destination of the finger. This operation represents a gesture of tilting a side mirror upward. A diagram on the lower side in FIG. 9 illustrates an example of a case where the driver performs an operation of moving his or her finger to the right while keeping the finger in contact with the touch panel. In this example, too, "S" represents the location where the driver first touches his or her finger, and "E" represents the destination of the finger. This operation represents a gesture of tilting a side mirror to the right.

Note that in this example, the finger is moved in the upward direction and the rightward direction, but the finger may be moved in any of the upward, downward, leftward, and rightward directions or in an oblique direction. For example, an operation of moving a finger diagonally upward to the right represents an operation of tilting a side mirror diagonally upward to the right.

The HMI controller 1011 generates a drive command for the actuator (34L or 34R) of the side mirror in the corresponding direction based on these operations, and transmits the drive command to the actuator. For example, in a case where the vehicle 1 is a right-hand drive vehicle and an operation (gesture) is performed on the inner display 22, the HMI controller 1011 outputs, to the actuator (34L) of the side mirror on the left side, a drive command for tilting the mirror in the direction indicated by the gesture. Also, in a case where an operation (gesture) is performed on the outer display 23, the HMI controller 1011 outputs, to the actuator (34R) of the side mirror on the right side, a drive command for tilting the mirror in the direction indicated by the gesture. The drive commands each include information indicating the direction in which the mirror is to be tilted. Each actuator performs an operation of tilting the mirror in the direction specified by a drive command while receiving the drive command. The output of the drive command is continued until the finger of the driver is separated from the operation area.

Here, note that if the actuator of a side mirror can be driven in all directions of 360 degrees, the mirror will be tilted in the specified direction, but if the directions in which the actuator can be driven are limited, for example, to four or eight directions, the actual driving direction may be determined based on the direction specified by the driver. For example, the HMI controller 1011 may output a drive command to tilt the mirror in the direction closest to the specified direction among the directions in which the actuator can be driven.

Here, note that when an operation to close the mirror control screen 504 is performed on either the inner display 22 or the outer display 23, the mirror control screen 504 is closed, and the previously displayed screen is displayed again on the inner display 22 and the outer display 23.

Now, the description will be returned to the screen displayed on the outer display 23.

### (5) Driving Position Adjustment Screen 505

A driving position adjustment screen 505 is a screen for adjusting the position and angle of a seat (a seat surface and a backrest) included in the vehicle 1 and the position and angle of the steering wheel. The driving position adjustment screen 505 allows the user to set the position and angle of the seat and the steering wheel. The vehicle controller 1012 obtains a touch operation via the HMI controller 1011, generates a user command based on the touch operation, and transmits the user command to the body ECU 30 to control the seat actuator 35 and the like.

### (6) ADAS Setting Screen 50

An ADAS setting screen 50 is a screen for notifying and setting an operation status of an advanced driver-assistance system included in the vehicle. For example, in a case where the advanced driving support system of the vehicle 1 includes an autocruise function, the user of the vehicle 1 can set a cruising speed, an inter-vehicle distance, whether or not to follow a preceding vehicle, whether or not to trace a lane, etc., via the ADAS setting screen 506. The information included in the ADAS setting screen 506 can be generated by the ADAS controller 1013.

### (7) Drive Mode Setting Screen 507

A drive mode setting screen 507 is a screen for setting the drive mode of the vehicle 1. A diagram on the right side in FIG. 7 is a diagram illustrating an example of the drive mode setting screen 507. For example, the user of the vehicle 1 can select a mode from a plurality of modes such as a normal mode, a sport mode, an eco mode, a snow mode, etc., via the drive mode setting screen 507. The vehicle controller 1012 changes the drive mode of the vehicle based on the selection.

### (8) Vehicle Function Setting Screen 50

A vehicle function setting screen 50 is a screen for using other functions of the vehicle 1. The other functions of the vehicle 1 include, for example, opening and closing an electric back door, adjusting a suspension, and the like.

### (9) Display Mode Setting Screen 509

A display mode setting screen 509 is a screen for setting the type of information to be displayed on the meter display 21. For example, in a case where a plurality of pieces of information other than the speed can be displayed on the meter display 21, the user of the vehicle 1 can customize the information to be displayed on the meter display 21 via the display mode setting screen 509.

The plurality of screens as exemplified above can be switched, for example, by performing a predetermined operation such as a left or right swipe on the touch panel provided on the outer display 23. Further, the HMI controller 1011 can display on the outer display 23 a shortcut screen 510 for jumping to each screen. A diagram on the right side in FIG. 6 is a diagram illustrating an example of the shortcut screen 510. The shortcut screen can be called, for example, by performing a predetermined operation (e.g., an operation of swiping upward from the bottom of the screen) on each screen including the main screen 501. On the shortcut screen 510, a plurality of interfaces (e.g., buttons) for transition to each screen are arranged, so that it is possible to move to a target screen by performing operations on the interfaces.

In this way, the HMI controller 1011 collects and outputs at least information related to the control of the vehicle to the outer display 23. The information related to the control of the vehicle is typically information related to the travel control of the vehicle. Examples of the information related to the travel control of the vehicle include information for controlling components belonging to the vehicle system and information for controlling components belonging to the drive system. In addition, among the components belonging to the electrical system, information for controlling components necessary for the vehicle to appropriately travel, such as lights and wipers, can also be considered information related to the travel control of the vehicle. Note that information that is not directly related to the travel control of the vehicle may be output to the outer display 23 as long as the information is related to the control of the vehicle. For example, information for controlling an electric door of the vehicle may be output to the outer display 23.

In addition, the HMI controller 1011 exceptionally displays the mirror control screen using both the inner display 22 and the outer display 23.

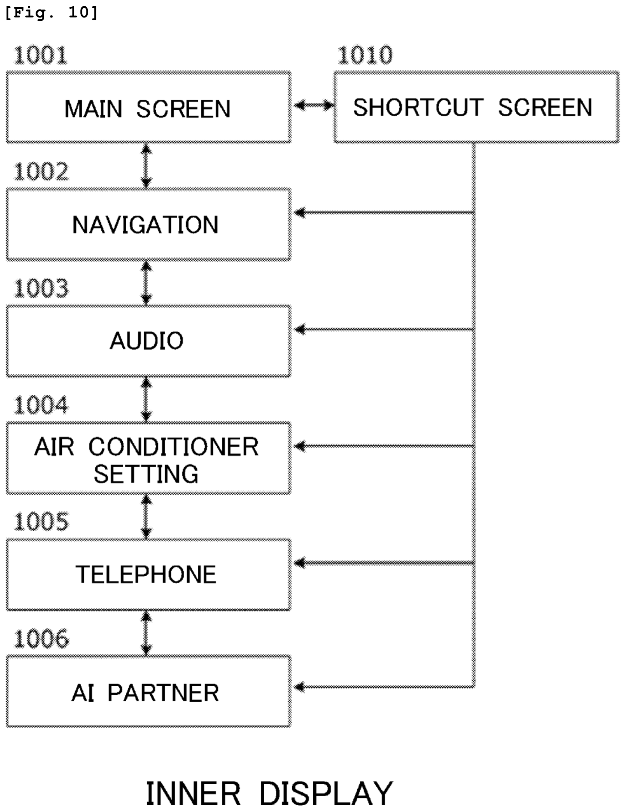

Next, the screen output to the inner display 22 will be described. The HMI controller 1011 can switch the screen output to the inner display 22 to a plurality of types of screens, in the same manner as in the outer display 23. FIG. 10 is a diagram illustrating transitions between the plurality of types of screens output to the inner display 22. As illustrated in the figure, the HMI controller 1011 can output the plurality of screens, centered around a main screen 1001, to the inner display 22.

### (1) Main Screen 1001

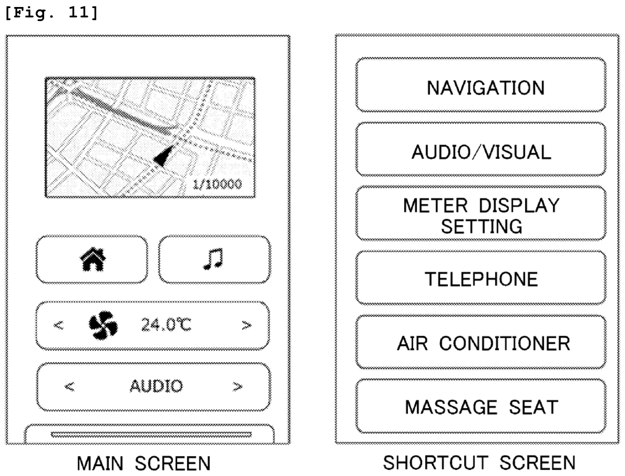

The main screen 1001 is a screen that is normally displayed on the inner display during traveling. A diagram on the left side in FIG. 11A is the diagram illustrating an example of the main screen 1001. The display contents of the main screen can be customized by the user.

### (2) Navigation Screen 1002

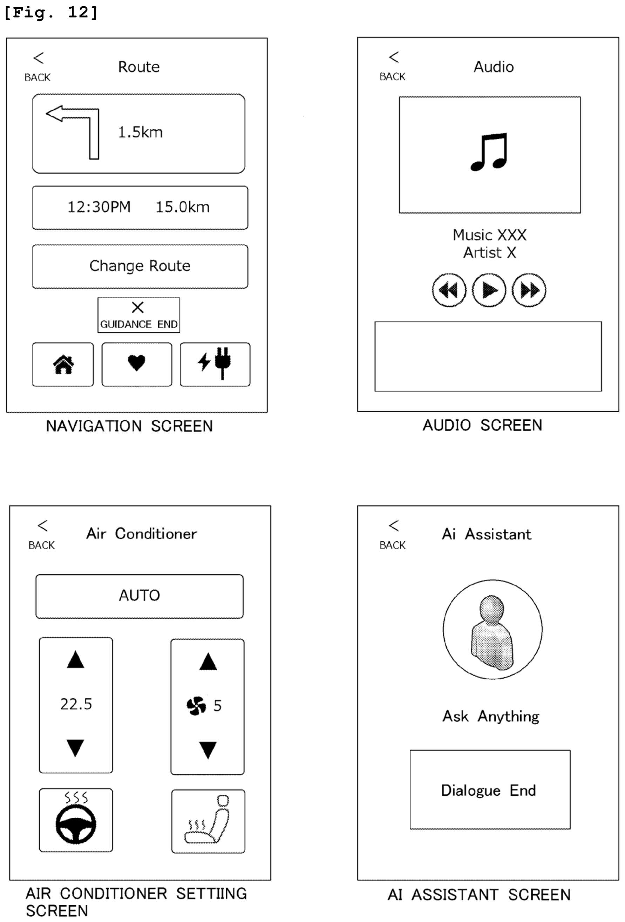

A navigation screen 1002 is a screen that is related to car navigation. A diagram on the upper left side in FIG. 12 is a diagram illustrating an example of the navigation screen 1002. The information included in the navigation screen 1002 is generated by the navigation module 1015. Note that in a case where map information in the car navigation is displayed on the center display 24, auxiliary information about the route of the vehicle 1 may be output on the navigation screen 1002. As the auxiliary information about the route, for example, guidance of a point where a right or left turn or the like is performed next, an estimated time of arrival, a remaining distance, and so on can be exemplified.

In addition, the navigation screen 1002 may include a part of the information and the user interface displayed on the center display 24. For example, frequently used user interfaces, such as a button to start route guidance to home, a button to call a bookmark, a button to start route guidance to a charging spot, etc., can be placed on the navigation screen 1002.

### (3) Audio Screen 1003

An audio screen 1003 is a screen related to an audio function of the vehicle 1. A diagram on the upper right side in FIG. 12 is a diagram illustrating an example of the audio screen 1003. The information included in the audio screen 1003 is generated by the entertainment controller 1014. The entertainment controller 1014 can obtain and play songs via a network or a medium. The audio screen 1003 can include information about the song being played and an interface for selecting a song.

### (4) Air Conditioner Setting Screen 1004

An air conditioner setting screen 1004 is a screen for controlling the car air conditioner of the vehicle 1. A diagram on the lower left side in FIG. 12C is a diagram illustrating an example of the air conditioner setting screen 1004. On the air conditioner setting screen 1004, it is possible to set the temperature and air volume of the car air conditioner and air conditioning devices to be operated (a steering heater, a seat heater, a defroster, and the like). The vehicle controller 1012 generates a user command based on an operation performed on the screen, and transmits the user command to the body ECU 30 to control the air conditioning module 31 and the like. Note that the car air conditioner is equipment of the vehicle 1 controlled by commands from the outside, but since it is related to the comfort of the occupant, the air conditioner setting screen 1004 is displayed on the inner display 22 instead of the outer display 23.

### (5) Telephone Screen 1005

A telephone screen 1005 is a screen for wirelessly connecting to a user terminal to make hands-free calls. In a case where the wireless communication module 13 has a module for wireless communication with a user terminal, a call from (or an incoming call to) the user terminal can be made via the module.

### (6) AI Partner Screen 1006

An AI partner screen 1006 is a screen for interacting with a virtual agent (AI partner) capable of natural language interaction. A diagram on the lower right side in FIG. 12D is a diagram illustrating an example of the AI partner screen 1006. The screen includes a virtual agent character, and the occupant of the vehicle can obtain information by interacting with the character. Natural language dialogue service is provided by the assistant module 1016. The AI partner screen 1006 may include an interface for giving instructions to the agent. Note that in a case where there are a plurality of occupants in the vehicle, the assistant module 1016 may be configured to be able to execute an optional agent corresponding to each person. The AI partner screen 1006 may include an interface for starting and ending interaction with the agent, an interface for replacing the agent, and the like.

The plurality of screens as exemplified above can be switched, for example, by performing a predetermined operation such as a left or right swipe on the touch panel provided on the inner display 22. Further, the HMI controller 1011 can display on the inner display 22 a shortcut screen 1010 for jumping to each screen. A diagram on the right side in FIG. 11 is a diagram illustrating an example of the shortcut screen 1010. The shortcut screen can be called, for example, by performing a predetermined operation (e.g., an operation of swiping upward from the bottom of the screen) on each screen including the main screen 1001. On the shortcut screen 1010, a plurality of interfaces (e.g., buttons) for transition to each screen are arranged, so that it is possible to move to a target screen by performing operations on the interfaces.

In this way, the HMI controller 1011 collects and outputs information related to the convenience and comfort of the occupants on the inner display 22.

Note that information about components that are part of the vehicle, such as the car air conditioner, but are related to the convenience or comfort of the occupants, may be output to the inner display 22 without being treated as information related to the control of the vehicle. In this manner, in the case where the target information corresponds to both the information related to the control of the vehicle and the information related to the convenience (or comfort) of the occupants, the target information may be selectively output to either the inner display 22 or the outer display 23 in accordance with predetermined criteria.

In addition, apart from the above description, the HMI controller 1011 may output predetermined information to the center display 24. For example, the information generated by the entertainment controller 1014 and the navigation module 1015 can be output not only to the inner display 22 but also to the center display 24.

### [Operation Obtaining Process on Mirror Control Screen]

Next, a process will be described in which the HMI controller 1011 obtains an operation by the user on the mirror control screen 504, and drives the mirror actuator 34L/34R.

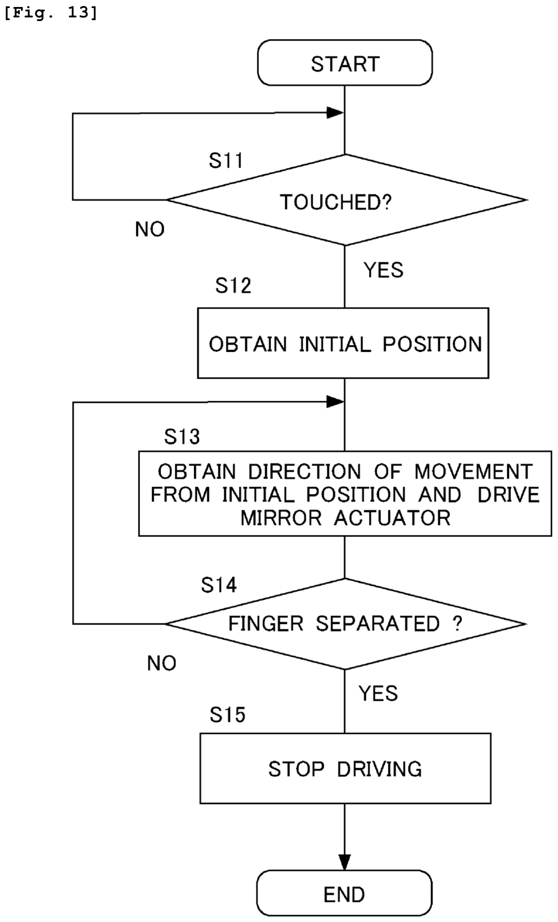

FIG. 13 is a flowchart of the process executed by the HMI controller 1011 when an operation for tilting a side mirror is performed on the mirror control screen 504.

First, in step S11, the HMI controller 1011 determines whether or not the inside of the predetermined operation area included in the mirror control screen has been touched. If the inside of the predetermined operation area has been touched, the processing proceeds to step S12. On the other hand, if the inside of the predetermined operation area has not been touched, the processing of step S11 is repeated.

In step S12, the HMI controller 1011 temporarily stores the position on the operation area touched in step S11 as an initial position.

In step S13, the HMI controller 1011 determines the direction of movement of a finger from the initial position, and drives a mirror actuator. The direction of finger movement can be determined by comparing the temporarily stored coordinates of the initial position with the current coordinates of the finger. For example, when the vehicle 1 is a right-hand drive vehicle and an operation has been performed on the inner display 22, the HMI controller 1011 transmits a drive command for tilting the mirror in the direction of finger movement to the actuator (34L) of the side mirror on the left side. On the other hand, when an operation has been performed on the outer display 23, the HMI controller 1011 transmits, to the actuator (34R) of the side mirror on the right side, a drive command for tilting the mirror in the direction of finger movement. Accordingly, for example, in a case where the direction of finger movement is the upward direction, the inclination of the side mirror is changed such that the field of view in the upper direction is captured. When the direction of finger movement is the outward direction of the vehicle body, the inclination of the side mirror is changed so that the field of view in the outward direction is captured. Note that the drive command is repeatedly transmitted while the finger is in contact with the touch panel.

In step S14, the HMI controller 1011 determines whether or not the finger has separated from the touch panel. If the finger has not separated from the touch panel, the processing repeats step S14. On the other hand, if the finger has separated from the touch panel, the processing proceeds to step S15. In step S15, the HMI controller 1011 stops outputting the drive command.

As described above, in the first embodiment, the HMI controller 1011 included in the vehicle ECU 10 uses the outer display 23 and the inner display 22 to output various types of information related to the vehicle and its traveling. In particular, the HMI controller 1011 outputs information (second information) related to the convenience and comfort of the occupants via the inner display disposed closer to the inner side of the vehicle, and outputs information (first information) related to the control of the vehicle via the outer display disposed closer to the outer side of the vehicle. According to such a configuration, the driver of the vehicle 1 will be able to intuitively recognize in which direction the information he or she is seeking is output on the display module, thereby minimizing the time during which the driver's attention is directed to the display.

Further, in the first embodiment, the HMI controller 1011 outputs information for operating a pair of left and right components such as side mirrors by using both the inner display 22 and the outer display 23. Such a configuration allows for more intuitive operation when operating the relevant component.

### (Modifications)

The above-described embodiment is merely an example, but the present disclosure can be implemented with appropriate modifications without departing from the spirit thereof. For example, the processing and/or means (devices, modules, etc.) described in the present disclosure can be freely combined and implemented as long as no technical contradiction occurs.

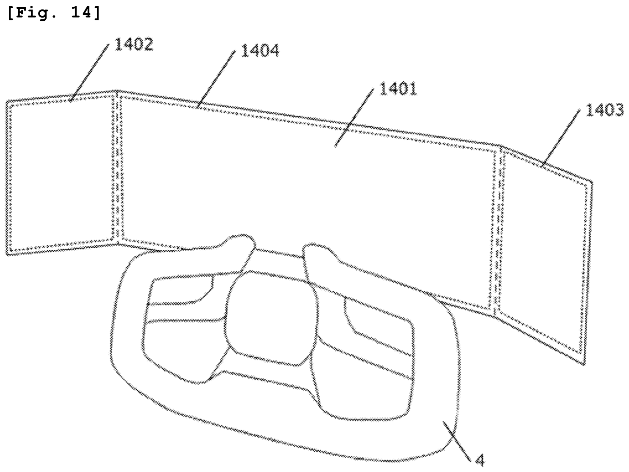

In addition, in the first embodiment, the form is exemplified in which the meter display 21, the inner display 22, and the outer display 23 are respectively independent of one another, but the displays do not necessarily have to be physically independent of one another. The display devices according to the present disclosure may be implemented by, for example, a single display device 1401, as illustrated in FIG. 14. In the example of FIG. 14, the display device 1401 has three display areas (display modules) separated by broken lines. The display device 1401 may have a structure in which a display surface is bent or curved at its portions indicated by dashed lines. In the illustrated example, a display area 1402 functions as the inner display 22, and a display area 1403 functions as the outer display 23. Also, a display area 1404 functions as a meter display 21.

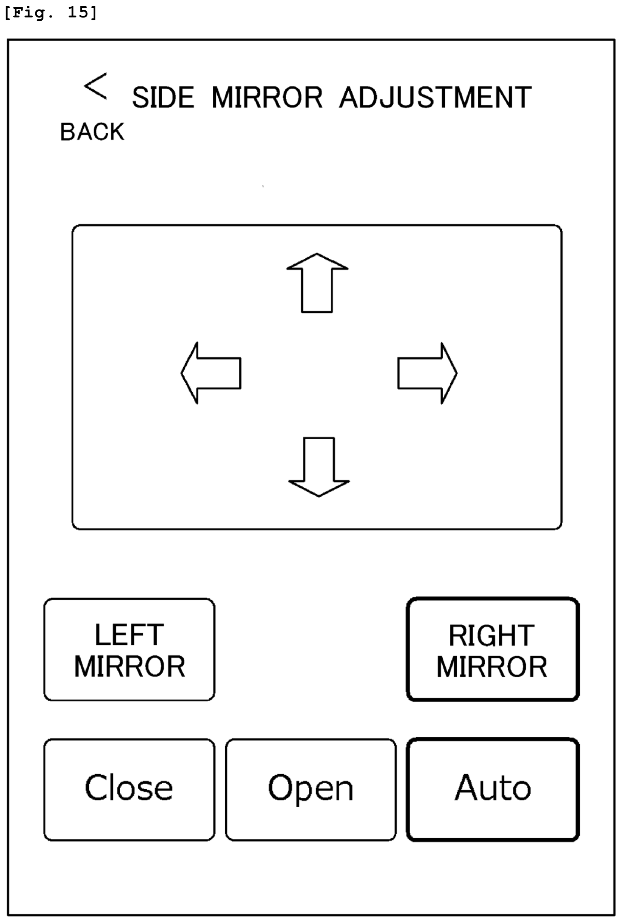

Moreover, in the first embodiment, an example is described in which the side mirrors are adjusted using both the inner display 22 and the outer display 23, but the side mirrors do not necessarily have to be adjusted using a pair of displays. For example, a display may be provided only on the right or left side of the steering wheel, and the side mirrors may be adjusted using the method exemplified above. FIG. 15 is an example of a screen displayed when the side mirrors are adjusted using a single display. In this case, as illustrated in the figure, an interface for specifying the left or right side mirror may be added to the screen.

Alternatively, such a screen may be displayed on the center display 24.

Further, in the first embodiment, the operation in which the driver touches any position within the operation area (first operation) and the operation in which the driver moves his or her finger without separating it from the touch panel (second operation) are described separately, but the gesture performed by the driver may also be an operation that performs the first operation and the second operation consecutively. Both operations correspond to a "swipe operation" in the present disclosure. In addition, in the first embodiment, an actuator is driven in a period from when the touch panel is pressed to when the finger is released, but the actuator may be driven for a predetermined time each time an operation of specifying a direction is performed by the touch panel (or each time a specified direction is changed) .

Furthermore, in the first embodiment, the driving speed of the actuator is described as being uniform, but the driving speed of the actuator may be variable. For example, in step S13, the distance of the finger from the initial position stored in step S12 may be determined, and the longer the distance, the faster the driving speed of the actuator may be set, whereas the shorter the distance, the slower the driving speed of the actuator may be set. In addition, the driving speed of the actuator may be made faster as the speed at which the finger is moved on the touch panel is faster, whereas the driving speed of the actuator may be made slower as the speed at which the finger is moved is slower.

In addition, in the first embodiment, two types of information, i.e., the information related to the convenience of the occupants and the information related to the comfort of the occupants, are exemplified as the second information, but the second information may be either one of these, or may include other information. Also, in the first embodiment, the information related to the control of the vehicle is exemplified as the first information, but the first information may include other information.

In addition, the processing described as being performed by one device or module may be shared and performed by a plurality of devices or modules. Alternatively, the processing described as being performed by different devices or modules may be performed by a single device or module. In a computer system, it is possible to flexibly change the hardware configuration (server configuration) that can achieve each function of the computer system.

The present disclosure can also be realized by supplying to a computer a computer program in which the functions described in the above-described embodiments are implemented, and reading out and executing the program by means of one or more processors included in the computer. Such a computer program may be provided to the computer by a non-transitory computer readable storage medium that can be connected to a system bus of the computer, or may be provided to the computer via a network. The non-transitory computer readable storage medium includes, for example, any type of disk such as a magnetic disk (e.g., a floppy (registered trademark) disk, a hard disk drive (HDD), etc.), an optical disk (e.g., a CD-ROM, a DVD disk, a Blu-ray disk, etc.) or the like, a read only memory (ROM), a random access memory (RAM), an EPROM, an EEPROM, a magnetic card, a flash memory, an optical card, or any type of medium suitable for storing electronic commands or instructions.

### DESCRIPTION OF REFERENCE SIGNS

- 1: vehicle
- 10: vehicle ECU
- 101: control device
- 102: storage device
- 103: communication module
- 21: meter display
- 22: inner display
- 23: outer display
- 24: center display
- 25: touch panel
- 26: voice unit
- 30: body ECU

## Claims

1. An in-vehicle system comprising a display device (27), and an information processing apparatus (10) configured to output information via the display device (27),
the display device (27) comprising a pair of display modules (22, 23) that are provided in a forward portion of a driver's seat (2) in a passenger compartment, are disposed at positions on both sides of a steering wheel (4) while protruding rearward of an instrument panel disposed in front of the steering wheel (4), and have touch panels (25),
the information processing apparatus (10) comprising a controller (101) configured to execute:
obtaining a touch operation performed on one of the pair of display modules (22, 23); and
outputting, based on the touch operation, a drive command for adjusting an inclination of a side mirror located in a direction corresponding to the display module (22, 23) on which the touch operation is performed, among the pair of display modules (22, 23).

2. The in-vehicle system comprising:
a display device (27) comprising at least one display module (22,23) with a touch panel (25); and
an information processing apparatus (10) comprising a controller (101) configured to perform:
obtaining a swipe operation performed on the display module (22, 23); and
outputting a drive command for adjusting an inclination of a side mirror of a vehicle (1) based on the swipe operation.

3. The in-vehicle system according to claim 2, wherein
the display device (27) comprises a pair of display modules (22, 23) disposed on both sides of a steering wheel (4); and
the controller (101) outputs a drive command for adjusting an inclination of a side mirror located in a direction corresponding to the display module (22, 23) on which the swipe operation is performed, among the pair of display modules (22, 23).

4. The in-vehicle system according to claim 3, wherein the drive command is a command for driving an actuator (34L, 34R) that adjusts the inclination of the side mirror located in the corresponding direction.

5. The in-vehicle system according to claim 3, wherein the controller (101) generates the drive command to tilt the side mirror located in the corresponding direction in a swiped direction.

6. The in-vehicle system according to claim 3, wherein
the swipe operation comprises a first operation of pressing a first position on the touch panel (25) and a second operation of moving a finger from the first position to a second position without separating the finger from the touch panel (25); and
the controller (101) determines a direction in which the side mirror located in the corresponding direction is tilted based on a direction of the second position with respect to the first position.

7. The in-vehicle system according to claim 6, wherein the controller (101) continuously outputs the drive command for changing the inclination of the side mirror in the determined direction while the second operation is performed.

8. The in-vehicle system according to claim 6, wherein when the second operation is performed, the controller (101) outputs the drive command for changing the inclination of the side mirror in the determined direction for a predetermined period of time.

9. The in-vehicle system according to claim 3, wherein the controller (101) further executes:
outputting first information including at least information related to control of the vehicle (1) via a first display module (23) disposed closer to an outer side of the vehicle (1) among the pair of display modules (22, 23); and
outputting second information including at least information related to convenience of an occupant of the vehicle (1) via a second display module (22) disposed closer to an inner side of the vehicle (1) among the pair of display modules (22, 23).

10. The in-vehicle system according to claim 9, wherein the controller (101) outputs information related to angle adjustment of left and right side mirrors, among the information related to the control of the vehicle (1), to each of the first display module (23) and the second display module (22).

11. A vehicle (1) comprising:
the in-vehicle system set forth in any one of claims 1 through 10; and
actuators (34L,34R) for driving the side mirrors on the left and right.

12. An information processing apparatus (10) configured to provide information via a display device (27) comprising at least one display module (22, 23) with a touch panel (25),
the information processing apparatus (10) comprising a controller (101) configured to execute:
obtaining a swipe operation performed on the display module (22, 23); and
outputting a drive command for adjusting an inclination of a side mirror of a vehicle (1) based on the swipe operation.

13. The information processing apparatus (10) according to claim 12, wherein
the display device (27) comprises a pair of display modules (22, 23) disposed on both sides of a steering wheel (4); and
the controller (101) outputs a drive command for adjusting an inclination of a side mirror located in a direction corresponding to the display module (22, 23) on which the swipe operation is performed, among the pair of display modules (22, 23).

14. The information processing apparatus (10) according to claim 13, wherein the drive command is a command for driving an actuator (34L,34R) that adjusts the inclination of the side mirror located in the corresponding direction.

15. The information processing apparatus (10) according to claim 13, wherein the controller (101) generates the drive command for tilting the side mirror located in the corresponding direction in the swiped direction.
